# EUROPÄISCHE PATENTSCHRIFT

(11) **EP 0 498 176 B1**
(45) Veröffentlichungstag und Bekanntmachung des Hinweises auf die Patenterteilung: **26.10.1994**
(21) Anmeldenummer: 92100577.3
(22) Anmeldetag: 15.01.1992
(51) Int. Cl.: A01B 61/04

(54) **Bodenbearbeitungsgerät in der Form eines Drehpfluges mit Überlastsicherung**
Ground working implement in the form of a reversible plough with overload safety
Machine pour le travail du sol en forme d'une charrue réversible avec sécurité contre la surcharge

(30) Priorität: 06.02.1991 DE 9101319 U
(43) Veröffentlichungstag der Anmeldung: 12.08.1992
(73) Patentinhaber: Lemken KG, D-46519 Alpen (DE)
(72) Erfinder: Van Laak, Theo, W-4192 Kalkar 1 (DE); Siebers, Josef Hermann, W-4232 Xanten 1 (DE)
(74) Vertreter: Schulte, Jörg, Dipl.-Ing.

(56) Entgegenhaltungen:
- AU-B- 409 170
- DE-A- 2 422 986
- DE-U- 8 502 500
- FR-A- 2 197 500

## Beschreibung

Die Erfindung betrifft ein Bodenbearbeitungsgerät in der Form eines 180° schwenk- oder drehbaren Drehpfluges mit Überlastsicherung, bei dem jeder der paarweise angeordneten Pflugkörper mittels eines Grindels um einen oberhalb und vor der Scharspitze am Pflugrahmen und im Abstand zum anderen Drehpunkt angeordneten Drehpunkt hochschwenkbar gelagert ist, wobei am gegenüberliegenden Ende der Grindel im Abstand voneinander paarweise den über ein elastisches Element miteinander verbundenen Grindeln zugeordnete Widerlager mit einem dazwischen angeordneten Stützelement vorgesehen sind, über das bei Überlastung eines arbeitenden Pflugkörpers ein Aufwärts- und nachfolgend ein selbsttätiges Zurückschwenken in die Bodeneingriffsstellung sichergestellt ist.

Eine derartige Überlastsicherung ist aus der DE-A-24 22 986 bekannt. Hierbei bilden die sich kreuzenden Teile des Stützelementes mit dem jeweils zugeordneten Grindel ein doppeltes Kniehebelsystem mit entgegengesetzten Kraftrichtungen, das durch das elastische Element beide Grindel mit großer Kraft entgegen dem Arbeitswiderstand des arbeitenden Pflugkörpers in der Mittellage hält. Beim Auftreffen auf ein Hindernis weicht der arbeitende Pflugkörper nach oben aus, wobei nur ein Teil des zweiteiligen Stützelementes Druckkräfte überträgt und die Kniehebelwirkung geringer wird, obwohl die Spannung des elastischen Elementes zufolge des Spreizens der Grindel zunimmt, d.h. daß die auf die Scharspitze wirkende Kraft um so kleiner ist, je höher der Pflugkörper nach oben ausweicht. Die Rückstellkraft zum Wiedereinsetzen des arbeitenden Pflugkörpers nimmt demnach um so mehr zu, je mehr sich der Pflugkörper absenkt und je mehr der Bodenwiderstand zunimmt. Statt des zweiteiligen Stützelementes ist auch die Verwendung eines einteiligen Stützelementes offenbart, das aber ebenso wie auch die beiden Teile des Stützelementes beim Ansprechen der Sicherung einer nachteiligen Reibung unterworfen ist. Diese auftretende Reibung führt zu Verlusten, die dabei auch zu einer Verringerung der Einzugskraft und einer unnötig hohen Auslösekraft beiträgt, so daß man versucht hat, das System durch Schmierung leichtgängiger zu machen. Aber auch dabei treten Reibungsverluste und Verschleiß auf, insbesondere, wenn die Schmierung nicht kontinuierlich wiederholt wird.

Der Erfindung liegt daher die Aufgabe zugrunde, eine annähernd reibungsfrei arbeitende Überlastsicherung zu schaffen, die damit auch zu geringen Belastungen des Systems führt.

Die Aufgabe wird erfindungsgemäß dadurch gelöst, daß das Stützelement als Wälzkörper ausgebildet ist, der sich rollend bei Ansprechen der Sicherung wechselweise an den jeweils kreuzweise gegenüberliegenden Widerlagern abstützend ausgebildet ist.

Überraschend ist eine derartige Überlastsicherung leichtgängig und praktisch verschmutzungsunanfällig, da in diesem Bereich nun eine Schmierung nicht mehr nötig ist. Die auftretende Rollreibung vermeidet praktisch nachteilige Reibungsverluste, so daß sich damit auch eine verbesserte Hysterese ergibt, d.h. eine erhöhte Einzugskraft bei gleichzeitig reduzierter Auslösekraft. Die verbesserte Hysterese führt zu einer weicheren Auslösung zu einem verbesserten Wiedereinziehen des Pflugkörpers und dadurch zu einer geringeren Belastung des Systems.

Nach einer zweckmäßigen Ausbildung der Erfindung ist vorgesehen, daß das Stützelement als Rolle ausgebildet ist. Über diese Rolle lassen sich die Reibungsverluste weitgehend eliminieren und zwar im Verhältnis Gleit- zu Rollreibung. Die Rolle rollt und reibt daher nicht.

Eine zusätzliche Stoßminderung bzw. Entlastung des Systems beim Auslösen wird dadurch erreicht, daß die Rolle als Ring ausgebildet ist. Hierbei gibt der Ring vorteilhaft bei Spitzenbelastungen elastisch nach. Dabei sollte der Ring zweckmäßigerweise eine dem elastischen Element angepaßte Wandstärke aufweisen.

Verschmutzungen einerseits und Herausfallen des Ringes bzw. der Rolle andererseits werden dadurch verhindert, daß die Rolle an den Flachseiten teilweise eingefaßt ist. Durch Änderung des Rollendurchmessers und/oder durch Änderung der Wälzfläche kann die Systemcharakteristik variiert werden.

Nach einer zweckmäßigen Ausbildung der Erfindung ist vorgesehen, daß die Widerlager als feststehende Achsen ausgebildet sind, zwischen denen dann die Rolle bzw. das Stützelement eingesetzt wird. Diese feststehenden Achsen bilden für die Rolle günstige Flächen, auf denen die Rolle abrollen kann. Denkbar ist es auch, daß die Widerlager als Wälzflächen ausgebildet sind oder entsprechende Wälzflächen aufweisen.

Die Veränderung der Einzugskraft wird dadurch erreicht, daß das die beiden korrespondierenden Grindel verbindende elastische Element als diese gegeneinander andrückender Energiespeicher ausgebildet ist. Zweckmäßigerweise ist das als Energiespeicher ausgebildete elastische Element bezüglich der von ihm ausgeübten Kraft einstellbar ausgebildet. So ist die Möglichkeit gegeben, die Einzugs- und Auslösekraft jeweils zu beeinflussen, um sich so den jeweiligen Gegebenheiten auf dem Feld optimal anpassen zu können. Besonders vorteilhaft ist es dabei, das elastische Element von zwei gegeneinander wirkenden Druckfedern bilden zu lassen.

Eine weitere Möglichkeit, die auftretende Reibung zu minimieren ist die, bei der das Stützelement als einteiliger Spreizkörper ausgebildet ist, der sich über seine scharfen Kippkanten beim Ansprechen der Sicherung wechselweise an den jeweils kreuzweise gegenüberliegenden Widerlagern abstützend ausgebildet ist. Vor allem hierbei wird erreicht, daß die Auslösekraft un die Einzugskraft gleich bemessen sind, da praktisch keine Reibung vorhanden ist. Der Spreizkörper kippt jeweils nur über seine Kippkanten entsprechend ab und spreizt die beiden Grindel gegen die Kraft des elastischen Elementes. Auch bei dieser Lösung wird der Spreizkörper so seitlich eingefaßt, daß eine Verschmutzung einerseits nicht zu befürchten ist und andererseits er auch nicht herausfallen kann.

Eine ergänzende Ausbildung sieht vor, daß die Kippkanten am Widerlager ausgebildet sind, womit eine gleich gute Wirkung erzielt werden kann, d.h. Reibungskräfte treten praktisch nicht auf.

Ein Herausrutschen des Spreizkörpers aus der vorgegebenen Position und damit eine jeweils genaue Einhaltung der Kippstellung ist gewährleistet, da die Kippkanten in einen größeren Winkel aufweisende Ausnehmungen geführt sind. Gleichzeitig ist damit vermieden, daß das Stützelement bzw. der Spreizkörper beim Kippen durch entsprechende Gegenflächen behindert wird.

Die Erfindung zeichnet sich insbesondere dadurch aus, daß die Reibung beim Ansprechen der Sicherung so weit reduziert ist, daß sie kaum noch oder gar keine Rolle mehr spielt. Damit kann gleichzeitig die Einzugskraft so weit erhöht werden, daß sie praktisch gleich der Auslösekraft ist. Verluste treten somit so gut wie gar nicht mehr auf. Vorteilhaft ist weiter, daß die gesamte Sicherung schmutzunanfällig ist, wobei sie zwischen den beiden Grindeln geschützt untergebracht ist. Die gesamte Überlastsicherung arbeitet wartungsfrei , da aufgrund der verringerten bzw. gegen Null gehenden Reibung Verschleiß nicht auftreten kann. Die Ausbildung des Stützelementes als Ring hat den Vorteil, daß Spitzenkräfte gedämpft werden, so daß der gesamte Auslöse- und auch der Einschwenkvorgang systemschonend ablaufen kann. Auch Anpassungen an sich ändernde Gegebenheiten können ohne Probleme vorgenommen werden, indem der Energiespeicher in seiner Vorspannung oder Kraft einstellbar ist. Die neuerungsgemäße Überlastsicherung ist vorteilhaft einfach in der Ausbildung und in der Bedienung und zeichnet sich durch eine höhere Lebensdauer aus.

Weitere Einzelheiten und Vorteile des Erfindungsgegenstandes ergeben sich aus der nachfolgenden Beschreibung der zugehörigen Zeichnung, in der bevorzugte Ausführungsbeispiele mit den dazu notwendigen Einzelheiten und Einzelteilen dargestellt sind. Es zeigen:
- Fig. 1: eine Seitenansicht der Überlastsicherung eines Volldrehpfluges in schematischer Darstellung in Arbeitsstellung,
- Fig. 2: die Überlastsicherung nach Fig. 1 nach Überwinden eines Hindernisses, also in ausgelöster Stellung,
- Fig. 3: eine Teilansicht der Uberlastsicherung mit Ring in vergrößerter Darstellung,
- Fig. 4: eine weitere Teilansicht der Überlastsicherung mit rollenartigem Stützelement,
- Fig. 5: ein als Spreizkörper ausgebildetes Stützelement mit endseitigen Kippkanten und
- Fig. 6: ein Stützelement, das an dem Widerlager zugeordneten Kippkanten kippend gelagert ist.

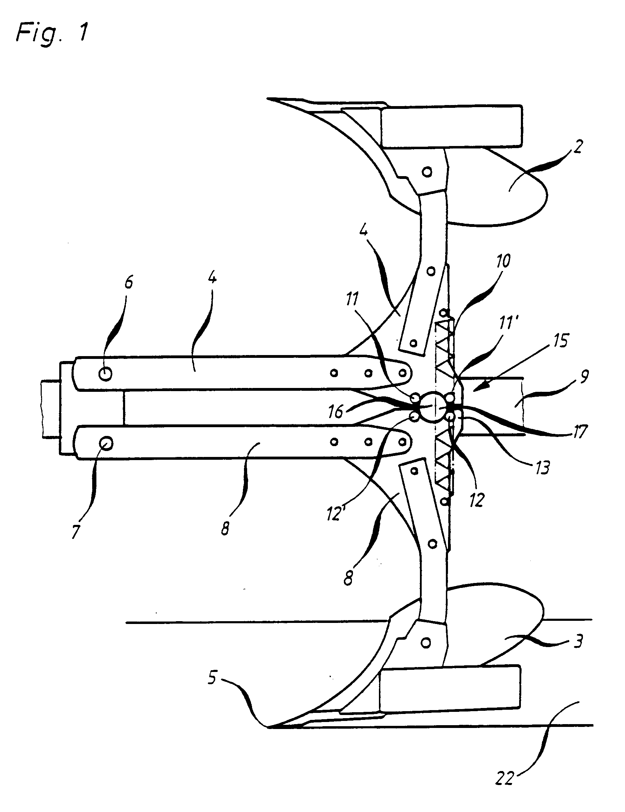

Fig. 1 zeigt die am Pflugrahmen (9) schwenkbar angeordneten Pflugkörper (2,3) eines Drehpfluges. Diese Pflugkörper (2,3) sind über Grindel (4, 8) schwenkbar am Pflugrahmen angelenkt und zwar über die vor den Scharspitzen (5) im Abstand zueinander angeordneten Drehpunkte (6, 7). Die Grindel (4, 8) sind über ein elastisches Element (10) am hinteren Ende (13) miteinander verbunden.

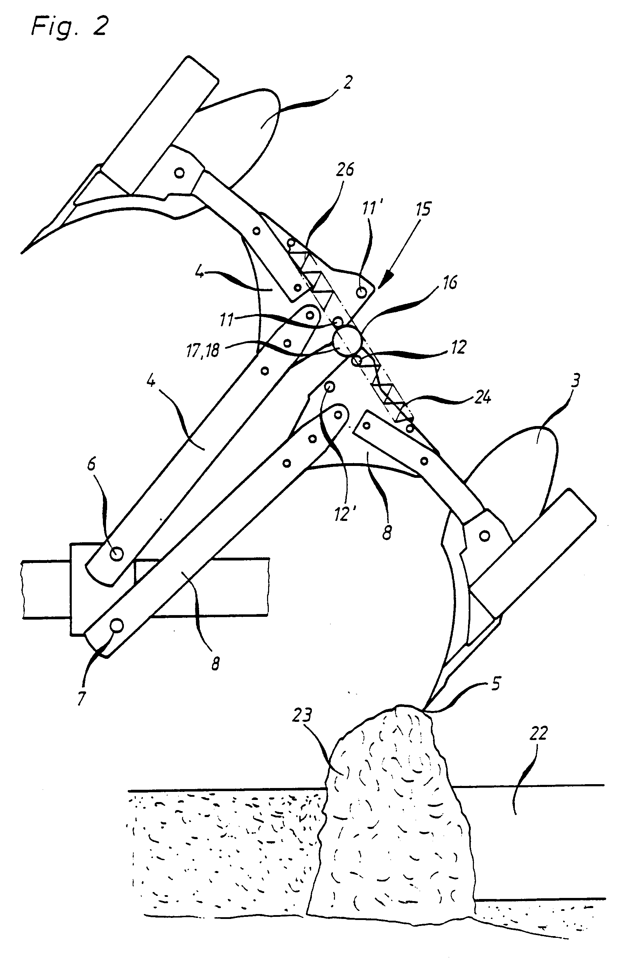

Am hinteren Ende (13) der Grindel (4, 8) sind Widerlager (11, 11', 12, 12') vorgesehen, an denen sich das Stützelement (16) jeweils abstützt. Bei der aus Fig. 1 und 2 ersichtlichen Ausführung ist das Stützelement (16) als Rolle (17) bzw. Ring (18) ausgebildet, das sich beim Ansprechen der Sicherung (15) wechselweise an den Widerlagern (11, 11', 12, 12') rollend abstützt. Beim Hochschwenken des Pflugkörpers (3) infolge des Anstoßens der Scharspitze (5) an einen im Erdboden (22) verborgenen Stein (23) erfolgt das Ausschwenken gemäß Fig. 2. Dabei rollt das Stützelement (16) bzw. die Rolle (17) an den kreuzweise einander gegenüberliegenden Widerlagern (11, 12) ab, während nach dem Drehen des Drehpfluges und Ausschwenken des Pflugkörpers (2) das Stützelement (16) an den Widerlagern (12' und 11') abrollt bzw. sich daran abstützt.

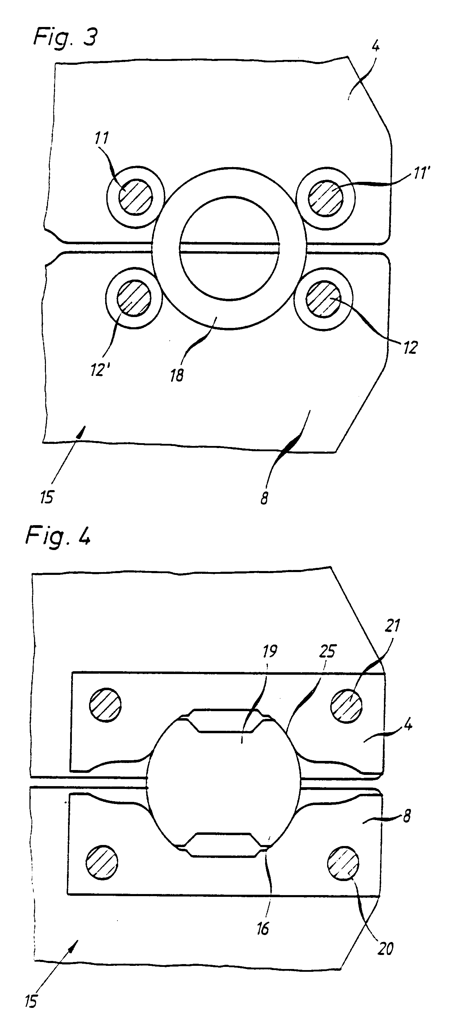

Die Fig. 3+4 zeigen jeweils eine Teilansicht der entsprechenden Sicherung (15) in vergrößerter Darstellung. Anhand der Fig. 3 wird deutlich, daß das hier als Ring (18) ausgebildete Stützelement (16) sich beim Ansprechen der Sicherung (15) vorteilhaft an den Widerlagern (11 bzw. 12) rollend abstützen kann, so daß praktisch keine Reibung entsteht und damit auch kein Verschleiß.

Nach Fig. 4 ist statt der Rolle (17) bzw. des Ringes (18) ein Stützelement (16) in Form einer geführten Teilrolle verwendet worden, das an den nicht für die Sicherungsarbeit benötigten Seiten abgeschnitten ist. Es bleiben aber die für das Ansprechen der Sicherung (15) notwendigen Wälzflächen, weil das Stützelement (16) und die Widerlager (11, 12) entsprechende Wälzflächen (25) aufweisen. Die Teilrolle und die Wälzflächen (25) sind als Einheit dargestellt, die als solche über die Bohrungen (20, 21) bzw. Schrauben mit den Grindeln (4, 8) verbunden ist.

Zur Sicherung der Stützelemente (16), egal welcher Ausführung, sind dessen Flachseiten (19) abgedeckt.

Bei der aus den Fig. 1 und 2 ersichtlichen Ausführung sind als elastisches Element (10) jeweils zwei Zugfedern (24, 26) vorgesehen, die die beiden Grindel (4, 8) jeweils gegeneinander anpressen.

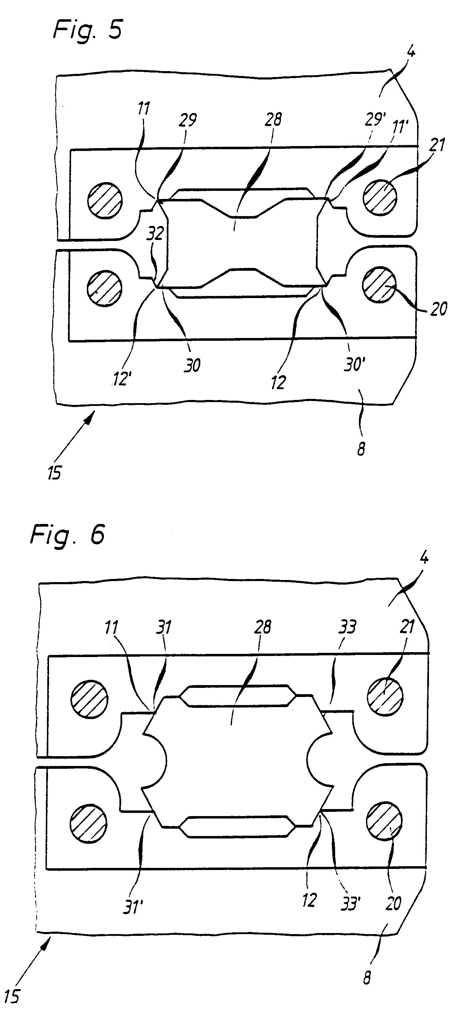

Abweichend von der Darstellung nach den Fig. 1 bis 4 zeigen die Fig. 5 und 6 nicht als Wälzkörper ausgebildete Stützelemente, sondern vielmehr Spreizkörper (28), die über Kippkanten (29, 30) verfügen, die an den Widerlagern (11, 12) geführt sind. Hierzu sind entsprechende einen größeren Winkel aufweisende Ausnehmungen (32) vorgesehen.

Beim Ansprechen der Sicherung (15) gemäß Fig. 5 und vergleichbar Fig. 2 kippt der Spreizkörper (28) über die einander kreuzweise gegenüberliegenden Kippkanten (29 und 30') ab, ohne daß eine nennenswerte Reibung dabei entstehen kann. Dies macht sich sowohl beim Hochschwenken als insbesondere auch beim Zurückschwenken der Grindel (4, 8) vorteilhaft bemerkbar, weil damit die Einzugskraft praktisch gleich groß der Auslösekraft ist.

Im Prinzip die gleiche Ausbildung zeigt Fig. 6, nur daß hier die Kippkanten (31) am Widerlager (11, 12) ausgebildet sind, während der Spreizkörper (28) mit entsprechenden Kippflächen (33) versehen ist.

In den Fig. 5 und 6 bilden Spreizkörper (28) und Widerlager (11, 12) eine mit den Grindeln (4, 8) zu verbindende Einheit.

## Patentansprüche

1. Bodenbearbeitungsgerät in der Form eines 180° schwenk- oder drehbaren Drehpfluges mit Überlastsicherung, bei dem jeder der paarweise angeordneten Pflugkörper (2, 3) mittels eines Grindels (4, 8) um einen (6) oberhalb und vor der Scharspitze am Pflugrahmen (9) und im Abstand zum anderen (7) Drehpunkt angeordneten Drehpunkt hochschwenkbar gelagert ist, wobei am gegenüberliegenden Ende (13) der Grindel (4, 8) im Abstand voneinander paarweise den über ein elastisches Element (10) miteinander verbundenen Grindeln (4, 8) zugeordnete Widerlager (11, 11', 12, 12') mit einem dazwischen angeordneten Stützelement (16) vorgesehen sind, über das bei Überlastung eines arbeitenden Pflugkörpers ein Aufwärts- und nachfolgend ein selbsttätiges Zurückschwenken in die Bodeneingriffsstellung sichergestellt ist,
**dadurch gekennzeichnet,**
daß das Stützelement (16) als Wälzkörper ausgebildet ist, der sich rollend bei Ansprechen der Sicherung (15) wechselweise an den jeweils kreuzweise gegenüberliegenden Widerlagern (11, 12, 11', 12') abstützend ausgebildet ist.

2. Bodenbearbeitungsgerät nach Anspruch 1,
**dadurch gekennzeichnet,**
daß das Stützelement (16) als Rolle (17) ausgebildet ist.

3. Bodenbearbeitungsgerät nach Anspruch 2,
**dadurch gekennzeichnet,**
daß die Rolle (17) als Ring (18) ausgebildet ist.

4. Bodenbearbeitungsgerät nach Anspruch 3,
**dadurch gekennzeichnet,**
daß der Ring (18) eine dem elastischen Element (10) angepaßte Wandstärke aufweist.

5. Bodenbearbeitungsgerät nach Anspruch 2,
**dadurch gekennzeichnet,**
daß die Rolle (17) an den Flachseiten (19) eingefaßt ist.

6. Bodenbearbeitungsgerät nach Anspruch 1,
**dadurch gekennzeichnet,**
daß die Widerlager (11, 12) als feststehende Achsen ausgebildet sind.

7. Bodenbearbeitungsgerät nach Anspruch 1,
**dadurch gekennzeichnet,**
daß die Widerlager (11, 12) als Wälzflächen (25) ausgebildet sind oder entsprechende Wälzflächen aufweisen.

8. Bodenbearbeitungsgerät nach Anspruch 1,
**dadurch gekennzeichnet,**
daß die Systemcharakteristik durch Veränderung der Wälzfläche (25) und/oder des Rollendurchmessers veränderbar ist.

9. Bodenbearbeitungsgerät nach Anspruch 1,
**dadurch gekennzeichnet,**
daß das die beiden korrespondierenden Grindel (4, 8) verbindende elastische Element (10) als diese gegeneinander andrückender Energiespeicher ausgebildet ist.

10. Bodenbearbeitungsgerät nach Anspruch 9,
**dadurch gekennzeichnet,**
daß das elastische Element (10) bezüglich der von ihm ausgeübten Kraft einstellbar ausgebildet ist.

11. Bodenbearbeitungsgerät nach Anspruch 9,
**dadurch gekennzeichnet,**
daß das elastische Element (10) von zwei gegeneinander wirkenden Druckfedern (24) gebildet ist.

12. Bodenbearbeitungsgerät in der Form eines 180° schwenk- oder drehbaren Drehpfluges mit Überlastsicherung, bei dem jeder der paarweise angeordneten Pflugkörper (2, 3) mittels eines Grindels (4, 8) um einen (6) oberhalb und vor der Scharspitze am Pflugrahmen (9) und im Abstand zum anderen (7) Drehpunkt angeordneten Drehpunkt hochschwenkbar gelagert ist, wobei am gegenüberliegenden Ende (13) der Grindel im Abstand voneinander paarweise den über ein elastisches Element (10) miteinander verbundenen Grindeln (4, 8) zugeordnete Widerlager (11, 11', 12, 12') mit einem dazwischen angeordneten Stützelement (16) vorgesehen sind, über das bei Überlastung eines arbeitenden Pflugkörpers ein Aufwärts- und nachfolgend ein selbsttätiges Zurückschwenken in die Bodeneingriffsstellung sichergestellt ist,
**dadurch gekennzeichnet,**
daß das Stützelement (16) als einteiliger Spreizkörper (28) ausgebildet ist, der sich über seine scharfen Kippkanten (29, 30) beim Ansprechen der Sicherung (15) wechselweise an den jeweils kreuzweise gegenüberliegenden Widerlagern (11, 12) abstützend ausgebildet ist.

13. Bodenbearbeitungsgerät nach Anspruch 12,
**dadurch gekennzeichnet,**
daß die Kippkanten (31) am Widerlager (11, 12) ausgebildet sind.

14. Bodenbearbeitungsgerät nach Anspruch 12,
**dadurch gekennzeichnet,**
daß die Kippkanten (29, 30, 31) in einen größeren Winkel aufweisende Ausnehmungen (32) geführt sind.

## Claims

1. A soil cultivating implement in the form of a reversible plough adapted to pivot or rotate through 180° and with an overload protection, wherein each of the pairwisely disposed plough bodies (2, 3) is mounted to be pivoted upwardly by means of a plough beam (4, 8) about a pivot point disposed (6) above and in front of the share point on the plough frame (9) arid at a distance from the other pivot point (7), whereby at the opposite end (13) of the plough beam (4, 8) there are, spaced apart from each other in pairs, abutments (11, 11', 12, 12') associated with the plough beams (4, 8) which are connected to each other by a resilient element (10) and with a bracing element (16) disposed between them, via which, if one of the working plough bodies is overloaded, an upwards and then an automatic pivoting back into the soil engagement position is ensured, characterised in that the bracing element (16) is constructed as a rolling element which, rolling upon response of the safety device (15), is constructed to be alternately supported on whichever are the crosswisely opposite abutments (11, 12, 11', 12').

2. A soil cultivating implement according to Claim 1, characterised in that the bracing element (16) is constructed as a roller (17).

3. A soil cultivating implement according to Claim 2, characterised in that the roller (17) is constructed as a ring (18).

4. A soil cultivating implement according to Claim 3, characterised in that the ring (18) has a wall thickness adapted to the resilient element (10).

5. A soil cultivating implement according to Claim 2, characterised in that the roller (17) is mounted on the flat sides (19).

6. A soil cultivating implement according to Claim 1, characterised in that the abutments (11, 12) are constructed as fixed spindles.

7. A soil cultivating implement according to Claim 1, characterised in that the abutments (11, 12) are constructed as rolling surfaces (25) or comprise corresponding rolling surfaces.

8. A soil cultivating implement according to Claim 1, characterised in that the system characteristics can be altered by varying the rolling surface (25) and/or the roller diameter.

9. A soil cultivating implement according to Claim 1, characterised in that the resilient element (10) connecting the two corresponding plough beams (4, 5) is constructed as an energy storage means which presses said plough beams against each other.

10. A soil cultivating implement according to Claim 9, characterised in that the resilient element (10) is constructed to be adjustable with regard to the force which is exerts.

11. A soil cultivating implement according to Claim 9, characterised in that the resilient element (10) is constituted by two thrust springs (24) which act against each other.

12. A soil cultivating implement in the form of a reversible plough adapted to pivot or rotate through 180° and with an overload protection, wherein each of the pairwisely disposed plough bodies (2, 3) is mounted to be pivoted upwardly by means of a plough beam (4, 8) about a pivot point disposed (6) above and in front of the share point on the plough frame (9) and at a distance from the other pivot point (7), whereby at the opposite end (13) of the plough beam (4, 8) there are, spaced apart from each other in pairs, abutments (11, 11', 12, 12') associated with the plough beams (4, 8) which are connected to each other by a resilient element (10) and with a bracing element (16) disposed between them, via which, if one of the working plough bodies is overloaded, an upwards and then an automatic pivoting back into the soil engagement position is ensured, characterised in that the bracing element (16) is constructed as a one-piece expanding member (28) which is constructed so that when the safety device (15) responds, the sharp tilting edges (29, 30) become alternately braced on the respective crosswisely opposite abutments (11, 12).

13. A soil cultivating implement according to Claim 12, characterised in that the tilting edges (31) are constructed on the abutment (11, 12).

14. A soil cultivating implement according to Claim 12, characterised in that the tilting edges (29, 30, 31) are guided in recesses (32) having a relatively large angle.

## Revendications

1. Instrument de travail du sol, se présentant sous la forme d'une charrue brabant pouvant basculer ou pivoter de 180° et comportant une sécurité **Non-stop**, lequel chacun des corps de charrue (2, 3) disposés parpaires est monté de facon á pouvoir être relevé par pivotement, au moyen d'un timon (4, 8), autour d'un point de rotation (6) situé sur le bâti de charrue (9) au-desus et en avant de la pointe du soc et â distance de l'autre point de ration (7) tandis que, sur l'extrémité opposée (13) des timons (4, 8), il est prévu, par paires et â distance l'un de l'autre **des contre-appuis (11, 11', 12, 12')**, sont associés aux timons (4, 8) reliés entre eux par l'intermédiaire d'un élément élastique (10) et qui comportent un élément d'appui (16) qui est disposé entre ces appuis et par l'intermedédiaire duquel est assuré, lors d'un effort excessif s'exercant sur un corps de charrue travaillant, un basculement vers le haut suivi d'un basculement automatique de retourdans la position d'attaque dans le sol, caractérisé en ce que l'élément d'appui (16) est réalisé sous la forme d'un corps de roulement qui, lorsque la sécurité (15) est sollicitée, prend appui alternativement, avec un mouvement de roulement, sur lesappuis (11, 12, 11', 12') chaque fois diagonalelement opposés.

2. Instrument de traivail du sol selon la revendica tion 1, caractérisé en ce que l'élément d'appui (16) est réalisé sous la forme d'un rouleau (17).

3. Instrument de travail du sol selon la reveendication 2, caractérisé en ce que le rouleau (17) est réalisé sous la forme d'un anneau (18).

4. Instrument de travail du sol selon la revendication 3, caractérisé en ce que l'anneau (18) a une épaisseur de paraoi adaptée â l'élément élastique (10).

5. Instrument de travail du sol selon la revendication 2, caractérisé en ce que le rouleau (17) est entouré sur ses faces planes (19).

6. Instrument de travail du sol selon la revendication 1, caractérisé en ce que les appuis (11, 12) sont réalisés sous la forme d'aces fixes.

7. Instrument de travail du sol selon la revendication 1, caractérosé en ce que les appuis (11, 12) sont réalisés sous la forme de surfaces de roulement (25) ou comportent des surfaces de roulelement correspondantes.

8. Instrument de travail du sol selon la revendication 1, caractérisé en ce que la caractéristique de systéme paut être modiffiée au moyen d'une modification de la surface de roulement (25) et/ou du diamétre de rouleau.

9. Instrument de travail du sol selon la revendication 1, caractérissé en ce que l'élément élastique (10) reliant les deux timons (4, 8) correspondants est réalisé sous la forme d#un accumulateur d'énergie appliquant ces timons l'un contre l'autre.

10. Instrument de travail du sol selon la revendication 9, caractérisé en ce que l'élément élastique (10) est realisé de facon â pouvoir être régié en ce qui concerne la force qu'il exerce.

11. Instrument de travail du sol selon la revendication 9, caractérisé en ce que l'élément élastique (10) est formé de deux ressorts de compression (24) agissant en direction l'un de l'autre.

12. Instrument de travail du sol, se présentant sous la forme d'une charrue brabant pouvant basculer ou pivoter de 180° et comportant une sécurté Non-stop lequel chacun des corps de charrue (2, 3) disposes par paires est monté de facon â pouvoir être relevé par pivotement, au moyen d'un timon (4, 8), autour d'un point de rotation (6) situé sur le bâti de charrue (9) au-dessus et en avant de la pointe du soc et â distance de l#autre point de rotation (7), tandis que, sur'l'extrémité opposée (13) des timons (4, 8), il est prévu, par paires etâ distance l'un de l'autre, des appuis (11, 11', 12, 12') qui sont associés aux timons (4, 8) reliés entre eux par l'intermédiare d'un élément élastique (10) et qui comportent un élément d'appui (16) qui est disposé ces appuis et par l'intermédiaire duquel est assure, lors d'un effort excessif s'exercant sur un corps de charrue travaillant, un basculement vers le haut suivi d'un basculement automatique de retour dans la position d'attaque dans le sol, caractérisé en ce que l'élément d'appui (16) est réalisé la forme d'un corps d'écartement (28) en une seule piéce qui,lorsque la sécuritée, prend appui alternativement, par ses arêtes vives de basculement (29, 30), sur les appuis (11, 12) chaque fois diagonalement Opposés.

13. Instrument de travail du sol selon la revendication 12, caractérisé en ce que les arêtes de basculement (31) sont réalisées sur l'appui (11, 12).

14. Instrument de travail du sol selon la revendication 12, caractérisé en ce que les arêtes de basculement (29, 30, 31) sont guidées dans des évidements (32) présentant un angle plus grand.
